# EUROPEAN PATENT APPLICATION

(11) **EP 4 807 278 A1**
(43) Date of publication of application: **16.09.2026**
(21) Application number: 24888268.0
(22) Date of filing: 15.04.2024
(51) Int. Cl.: F24H 1/14, A47L 15/42, B01F 23/23, B01F 25/10, B01F 25/45, C02F 1/66, F24D 3/10, F24H 9/00

(54) **APPARATUS**

(30) Priority: 06.11.2023 JP 2023189397
(71) Applicant: Rinnai Corporation, Nagoya-shi, Aichi 454-0802 (JP)
(72) Inventor: FURUKAWA Shinya, Nagoya-shi, Aichi 454-0802 (JP)
(74) Representative: Grättinger Möhring von Poschinger Patentanwälte Partnerschaft mbB
(86) International application number: PCT/JP2024/014977
(87) International publication number: WO 2025/099966

(57) **Abstract**

An apparatus may include a container open to atmosphere, a liquid passage through which a liquid flows, an air introducer configured to introduce air into the liquid passage, and a micro bubble generator disposed on the liquid passage and configured to generate micro bubbles in the liquid flowing through the liquid passage by using the air introduced into the liquid passage. The air introducer may include an intake port that is open to an interior of the container and an air introduction passage connecting the intake port to an interior of the liquid passage.

## Description

### Technical Field

The technology disclosed in the specification relates to an apparatus.

### Background Art

Japanese Patent Application Publication No. 2015-161491 describes an apparatus including a liquid passage through which a liquid flows, an air introducer configured to introduce air into the liquid passage, and a micro bubble generator disposed on the liquid passage and configured to generate micro bubbles in the liquid flowing through the liquid passage by using the air introduced into the liquid passage. The air introducer includes an intake port that is open to the atmosphere and an air introduction passage connecting the intake port to the interior of the liquid passage.

### Summary of Invention

### Technical Problem

The apparatus of Japanese Patent Application Publication No. 2015-161491 is configured to introduce air into the liquid passage through the intake port and the air introduction passage. However, if the liquid flowing through the liquid passage flows into the air introduction passage and flows out from the air introduction passage through the intake port, the liquid may flow to an unintended location (e.g., location where electrical wiring is arranged). The present specification provides a technology for suppressing a liquid flowing through a liquid passage from flowing to an unintended location.

### Solution to Technical Problem

In a first aspect of the technology, an apparatus may comprise a container open to atmosphere, a liquid passage through which a liquid flows, an air introducer configured to introduce air into the liquid passage, and a micro bubble generator disposed on the liquid passage and configured to generate micro bubbles in the liquid flowing through the liquid passage by using the air introduced into the liquid passage. The air introducer may include an intake port that is open to an interior of the container and an air introduction passage connecting the intake port to an interior of the liquid passage.

According to the configuration above, air in the container can be introduced into the liquid passage through the intake port and the air introduction passage. Further, according to the configuration above, even if the liquid flowing through the liquid passage flows into the air introduction passage and flows out from the air introduction passage through the intake port, the liquid flows into the container. Thus, the liquid flowing through the liquid passage is suppressed from flowing to an unintended location.

In a second aspect according to the first aspect, the apparatus may further comprise a heater configured to heat a heat medium, a space heating circuit configured to circulate the heat medium that has been heated by the heater to a space heating device configured for space heating by heat dissipated from the heat medium, a space heating pump configured to pump the heat medium flowing through the space heating circuit, and a cistern disposed on the space heating circuit. The container may include the cistern.

According to the configuration above, air in the cistern can be introduced into the liquid passage through the intake port and the air introduction passage. Further, according to the configuration above, even if the liquid flowing through the liquid passage flows into the air introduction passage and flows out from the air introduction passage through the intake port, the liquid flows into the cistern. Thus, the liquid flowing through the liquid passage is suppressed from flowing to an unintended location.

In a third aspect according to the first aspect, the apparatus may further comprise a combustor, a latent heat exchanger configured to recover latent heat of combustion gas generated by the combustor and to heat a heat medium, and a neutralizer configured to neutralize condensate generated by the latent heat exchanger. The container may include the neutralizer.

According to the configuration above, air in the neutralizer can be introduced into the liquid passage through the intake port and the air introduction passage. Further, according to the configuration above, even if the liquid flowing through the liquid passage flows into the air introduction passage and flows out from the air introduction passage through the intake port, the liquid flows into the neutralizer. Thus, the liquid flowing through the liquid passage is suppressed from flowing to an unintended location.

In a fourth aspect according to the first aspect, the apparatus may further comprise a washing chamber configured to house tableware, a water supply passage through which water flows from a water supply to the washing chamber, a washing nozzle disposed in the washing chamber, a washing passage disposed in the washing chamber and connected to the washing nozzle, a washing pump configured to pump water in the washing chamber to the washing nozzle through the washing passage, and a water drainage passage through which water discharged from the washing chamber flows. The liquid passage may be the water supply passage. The container may include the washing chamber.

According to the configuration above, air in the washing chamber can be introduced into the water supply passage through the intake port and the air introduction passage. Further, according to the configuration above, even if the liquid flowing through the water supply passage flows into the air introduction passage and flows out from the air introduction passage through the intake port, the liquid flows into the washing chamber. Thus, the liquid flowing through the water supply passage is suppressed from flowing to an unintended location.

In a fifth aspect of the technology, an apparatus may comprise a liquid drainage passage open to atmosphere, a liquid passage through which a liquid flows, an air introducer configured to introduce air into the liquid passage, and a micro bubble generator disposed on the liquid passage and configured to generate micro bubbles in the liquid flowing through the liquid passage by using the air introduced into the liquid passage. The air introducer may include an intake port that is open to an interior of the liquid drainage passage and an air introduction passage connecting the intake port to an interior of the liquid passage.

According to the configuration above, air in the liquid drainage passage can be introduced into the liquid passage through the intake port and the air introduction passage. Further, according to the configuration above, even if the liquid flowing through the liquid passage flows into the air introduction passage and flows out from the air introduction passage through the intake port, the liquid flows into the liquid drainage passage. Thus, the liquid flowing through the liquid passage is suppressed from flowing to an unintended location.

In a sixth aspect according to the fifth aspect, the apparatus may further comprise a heater configured to heat a heat medium, a space heating circuit configured to circulate the heat medium that has been heated by the heater to a space heating device configured for space heating by heat dissipated from the heat medium, a space heating pump configured to pump the heat medium flowing through the space heating circuit, a cistern disposed on the space heating circuit, and a first overflow passage having one end thereof connected to a first overflow port of the cistern and another end thereof connected to a predetermined drainage location. The liquid drainage passage may include the first overflow passage.

According to the configuration above, air in the first overflow passage can be introduced into the liquid passage through the intake port and the air introduction passage. Further, according to the configuration above, even if the liquid flowing through the liquid passage flows into the air introduction passage and flows out from the air introduction passage through the intake port, the liquid flows through the first overflow passage to the predetermined drainage location. Thus, the liquid flowing through the liquid passage is suppressed from flowing to an unintended location.

In a seventh aspect according to the fifth aspect, the apparatus may further comprise a combustor, a latent heat exchanger configured to recover latent heat of combustion gas generated by the combustor and to heat a heat medium, a neutralizer configured to neutralize condensate generated by the latent heat exchanger, and a second overflow passage having one end thereof connected to a second overflow port of the neutralizer and another end thereof connected to a predetermined drainage location. The liquid drainage passage may include the second overflow passage.

According to the configuration above, air in the second overflow passage can be introduced into the liquid passage through the intake port and the air introduction passage. Further, according to the configuration above, even if the liquid flowing through the liquid passage flows into the air introduction passage and flows out from the air introduction passage through the intake port, the liquid flows through the second overflow passage to the predetermined drainage location. Thus, the liquid flowing through the liquid passage is suppressed from flowing to an unintended location.

In an eighth aspect according to the fifth aspect, the apparatus may further comprise a washing chamber configured to house tableware, a water supply passage through which water flows from a water supply to the washing chamber, a washing nozzle disposed in the washing chamber, a washing passage disposed in the washing chamber and connected to the washing nozzle, a washing pump configured to pump water in the washing chamber to the washing nozzle through the washing passage, and a water drainage passage through which water discharged from the washing chamber flows. The liquid passage may be at least one of the water supply passage and the washing passage. The liquid drainage passage may include the water drainage passage.

According to the configuration above, air in the water drainage passage can be introduced into at least one of the water supply passage and the washing passage through the intake port and the air introduction passage. Further, according to the configuration above, even if water flowing through at least one of the water supply passage and the washing passage flows into the air introduction passage and flows out from the air introduction passage through the intake port, the water flows into the water drainage passage. Thus, the water flowing through at least one of the water supply passage and the washing passage is suppressed from flowing to an unintended location.

### Brief Description of Drawings

[FIG. 1] A diagram schematically illustrating a configuration of a heating apparatus 2 according to a first embodiment;
[FIG. 2] A cross-sectional view of a micro bubble generator 190 of the heating apparatus 2 according to the first embodiment;
[FIG. 3] A diagram schematically illustrating a configuration of a heating apparatus 252 according to a second embodiment;
[FIG. 4] A diagram schematically illustrating a configuration of a heating apparatus 302 according to a third embodiment;
[FIG. 5] A diagram schematically illustrating a configuration of a dishwasher 402 according to a fourth embodiment; and
[FIG. 6] A diagram schematically illustrating a configuration of a dishwasher 502 according to a fifth embodiment.

### Description of Embodiments

### (First Embodiment: Heating Apparatus 2)

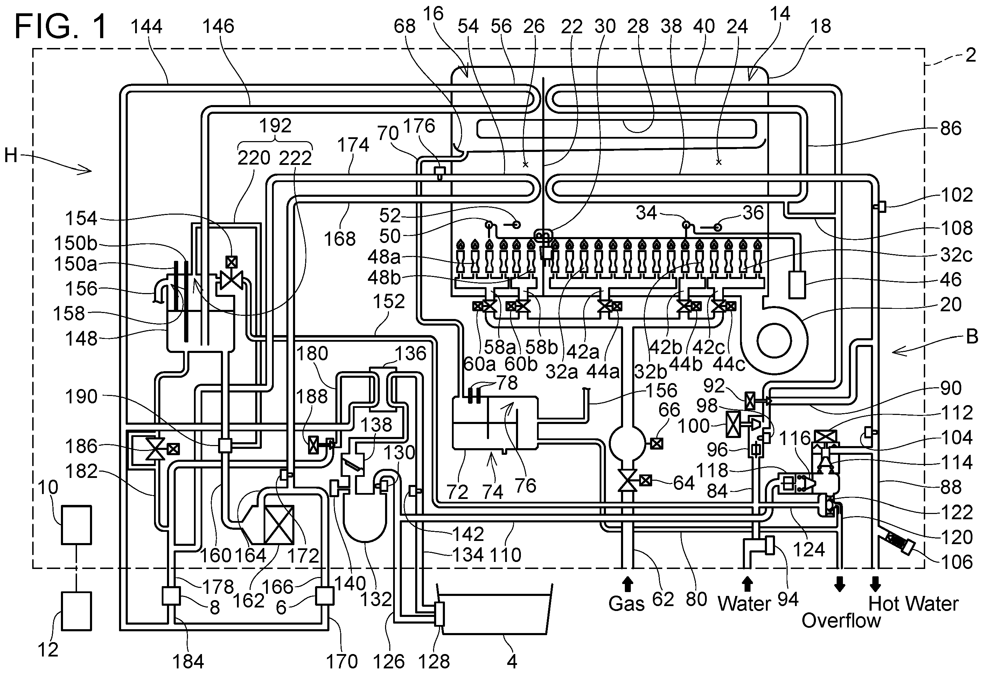

A heating apparatus 2 illustrated in FIG. 1 can heat water supplied from a water supply (not illustrated), such as a municipal water supply, to a desired temperature and supply the heated water to a faucet (not illustrated) in a kitchen or a bathtub 4 in a bathroom. Further, the heating apparatus 2 can also reheat water in the bathtub 4. Moreover, the heating apparatus 2 can also heat a heat medium (water in this embodiment) and supply the heated heat medium to a low-temperature space heating terminal 6 and/or a high-temperature space heating terminal 8 to heat spaces via the low-temperature space heating terminal 6 and/or the high-temperature space heating terminal 8.

The heating apparatus 2 comprises a controller 10 including a CPU, a ROM, a RAM, and the like. In the ROM, various operation programs are stored. In the RAM, various signals input to the controller 10 and various data generated in the course of processing by the CPU are temporarily stored. The controller 10 controls constituent elements of the heating apparatus 2 by the CPU executing processes based on the information stored in the ROM and the RAM. Further, the controller 10 is bidirectionally communicable with a remote controller 12 installed in the kitchen or the bathroom. The remote controller 12 presents various information of the heating apparatus 2 to a user and also receives various user operations to the heating apparatus 2.

The heating apparatus 2 further comprises a first heat source 14, a second heat source 16, a combustion chamber 18, and a combustion fan 20. The first heat source 14 is used to supply hot water to the faucet (not illustrated) and to supply hot water to the bathtub 4. The second heat source 16 is used to reheat water in the bathtub 4 and also for space heating. The interior of the combustion chamber 18 is partitioned into a first combustion chamber 24 and a second combustion chamber 26 by a partition wall 22. The first heat source 14 is housed in the first combustion chamber 24, and the second heat source 16 is housed in the second combustion chamber 26. Air is supplied into the combustion chamber 18 by the combustion fan 20. An exhaust outlet 28 is formed in the combustion chamber 18. Combustion gases from the first heat source 14 and the second heat source 16 are discharged to the outside through the exhaust outlet 28. Further, a combustion-chamber temperature sensor 30 configured to detect the temperature in each of the first combustion chamber 24 and the second combustion chamber 26 is installed in the combustion chamber 18.

The first heat source 14 comprises burners 32a, 32b, 32c, an ignition plug 34, a flame rod 36, a sensible heat exchanger 38, and a latent heat exchanger 40. The burners 32a, 32b, 32c have different combustion areas from each other. A fuel gas is supplied to the burners 32a, 32b, 32c through gas branch passages 42a, 42b, 42c, respectively. Shutoff valves 44a, 44b, 44c are disposed on the gas branch passages 42a, 42b, 42c, respectively. The shutoff valves 44a, 44b, 44c open and close the corresponding gas branch passages 42a, 42b, 42c. The ignition plug 34 is operated by an igniter 46. When the ignition plug 34 is operated while the combustion fan 20 is supplying air and the fuel gas is supplied to the burners 32a, 32b, 32c through the gas branch passages 42a, 42b, 42c, the burners 32a, 32b, 32c burn the fuel gas. The burners 32a, 32b, 32c burn the fuel gas when the corresponding shutoff valves 44a, 44b, 44c are open, while they do not burn the fuel gas when the corresponding shutoff valves 44a, 44b, 44c are closed. The flame rod 36 detects whether the burners 32a, 32b, 32c are burning the fuel. The combustion gas from the burners 32a, 32b, 32c is cooled by heat exchange in the sensible heat exchanger 38 and is subsequently further cooled by heat exchange in the latent heat exchanger 40, and then is discharged through the exhaust outlet 28 of the combustion chamber 18.

The second heat source 16 comprises burners 48a, 48b, an ignition plug 50, a flame rod 52, a sensible heat exchanger 54, and a latent heat exchanger 56. The burners 48a, 48b have different combustion areas from each other. A fuel gas is supplied to the burners 48a, 48b through gas branch passages 58a, 58b, respectively. Shutoff valves 60a, 60b are disposed on the gas branch passages 58a, 58b, respectively. The shutoff valves 60a, 60b open and close the corresponding gas branch passages 58a, 58b. The ignition plug 50 is operated by the igniter 46. When the ignition plug 50 is operated while the combustion fan 20 is supplying air and the fuel gas is supplied to the burners 48a, 48b through the gas branch passages 58a, 58b, the burners 48a, 48b burn the fuel gas. The burners 48a, 48b burn the fuel gas when the corresponding shutoff valves 60a, 60b are open, while they do not burn the fuel gas when the corresponding shutoff valves 60a, 60b are closed. The flame rod 52 detects whether the burners 48a, 48b are burning the fuel. The combustion gas from the burners 48a, 48b is cooled by heat exchange in the sensible heat exchanger 54 and is subsequently further cooled by heat exchange in the latent heat exchanger 56, and then is discharged through the exhaust outlet 28 of the combustion chamber 18.

The upstream ends of the gas branch passages 42a, 42b, 42c and the upstream ends of the gas branch passages 58a, 58b are connected to the downstream end of a gas supply passage 62. The fuel gas is supplied into the upstream end of the gas supply passage 62 from a gas supply (not illustrated). A shutoff valve 64 and a flow control valve 66 are disposed on the gas supply passage 62. The shutoff valve 64 opens and closes the gas supply passage 62. The flow control valve 66 adjusts the open area of the gas supply passage 62 to control a flow rate of the fuel gas in the gas supply passage 62 to control combustion of the fuel gas in the burners 32a, 32b, 32c of the first heat source 14 and in the burners 48a, 48b of the second heat source 16.

A drain pan 68 is disposed within the combustion chamber 18. Condensate generated by the latent heat exchanger 40 of the first heat source 14 and condensate generated by the latent heat exchanger 56 of the second heat source 16 drip into the drain pan 68. The condensate collected in the drain pan 68 is delivered to a neutralizer 72 through a condensate collection passage 70 and stored in the neutralizer 72. The neutralizer 72 is filled with a neutralizing agent (not illustrated) such as calcium carbonate. The condensate in the neutralizer 72 is neutralized with the neutralizing agent. Further, the neutralizer 72 comprises a trap structure 74. Typically, the condensate stored in the neutralizer 72 separates a space upstream of the trap structure 74 from a space downstream of the trap structure 74. Thus, even when the combustion gas from the first heat source 14 and the second heat source 16 flows into the neutralizer 72 through the condensate collection passage 70, the combustion gas is suppressed from flowing into the space downstream of the trap structure 74. Further, an overflow port 76 is formed in the neutralizer 72. The overflow port 76 is open to the space downstream of the trap structure 74. The overflow port 76 is connected to the upstream end of an overflow passage 80. The downstream end of the overflow passage 80 is connected to a predetermined drainage location (e.g., sewage line). When the water level in the neutralizer 72 raises and the water (condensate) in the neutralizer 72 reaches the lower edge of the overflow port 76, the water is drained through the overflow port 76 and the overflow passage 80 to the drainage location. In this way, the water level in the neutralizer 72 is maintained lower than the lower edge of the overflow port 76. Further, a water level electrode 78 is disposed on the neutralizer 72 and is configured to detect an abnormal water level rise in the neutralizer 72. The water level detected by the water level electrode 78 is above the lower edge of the overflow port 76.

The upstream end of the latent heat exchanger 40 of the first heat source 14 is connected to the downstream end of a water supply passage 84. Water is supplied to the upstream end of the water supply passage 84 from a water supply (not illustrated). The downstream end of the latent heat exchanger 40 is connected to the upstream end of the sensible heat exchanger 38 via a communication passage 86. The downstream end of the sensible heat exchanger 38 is connected to the upstream end of a hot water supply passage 88. The downstream end of the hot water supply passage 88 is connected to the faucet (not illustrated) or the like. A hot water bypass passage 90 connects the water supply passage 84 to the hot water supply passage 88. A bypass servo 92 is disposed at the connection between the water supply passage 84 and the hot water bypass passage 90. The bypass servo 92 adjusts the open area of the hot water bypass passage 90 to control a ratio between a flow rate of water supplied to the first heat source 14 through the water supply passage 84 and a flow rate of water supplied to the hot water bypass passage 90 from the water supply passage 84. A first drain cock 94, a flow sensor 96, a water supply thermistor 98, and a flow servo 100 are disposed on a portion of the water supply passage 84 upstream of the bypass servo 92. The flow sensor 96 detects a flow rate of water flowing through the water supply passage 84. The water supply thermistor 98 detects the temperature of water flowing through the water supply passage 84. The flow servo 100 controls the flow rate of water flowing through the water supply passage 84. A heat exchanger exit thermistor 102 is disposed on a portion of the hot water supply passage 88 upstream of the connection between the hot water bypass passage 90 and the hot water supply passage 88. The heat exchanger exit thermistor 102 detects the temperature of water flowing from the sensible heat exchanger 38 into the hot water supply passage 88. A hot water supply thermistor 104 and a second drain cock 106 are disposed on a portion of the hot water supply passage 88 downstream of the connection between the hot water bypass passage 90 and the hot water supply passage 88. The hot water supply thermistor 104 detects the temperature of water supplied to the faucet (not illustrated) from the hot water supply passage 88. Further, the water supply passage 84 and the communication passage 86 are connected by a heat exchanger bypass passage 108.

For the heating apparatus 2 to supply hot water to the faucet (not illustrated), the burners 32a, 32b, 32c of the first heat source 14 burn the fuel gas. In this case, water supplied from the water supply into the water supply passage 84 is heated by heat exchange in the latent heat exchanger 40 and subsequently further heated by heat exchange in the sensible heat exchanger 38, and then is supplied to the faucet through the hot water supply passage 88. At this time, the high-temperature water flowing from the sensible heat exchanger 38 into the hot water supply passage 88 is mixed with the low-temperature water flowing from the water supply passage 84 through the hot water bypass passage 90 into the hot water supply passage 88, thereby adjusting the temperature of water flowing through the hot water supply passage 88. The temperature of water flowing through the hot water supply passage 88 can be adjusted to a desired temperature by adjusting combustion of the burners 32a, 32b, 32c of the first heat source 14 and/or adjusting the open area of the hot water bypass passage 90 by the bypass servo 92.

The upstream end of a bathtub filling passage 110 is connected to a portion of the hot water supply passage 88 between the hot water supply thermistor 104 and the second drain cock 106. A bathtub filling control valve 112, check valves 114, 116, and a flow rate sensor 118 are disposed on the bathtub filling passage 110. The bathtub filling control valve 112 opens and closes the bathtub filling passage 110. The check valves 114, 116 permit a water flow from the upstream end of the bathtub filling passage 110 toward the downstream end thereof and prohibits a water flow from the downstream end of the bathtub filling passage 110 toward the upstream end thereof. The flow rate sensor 118 detects a flow rate of water flowing through the bathtub filling passage 110. A portion of the bathtub filling passage 110 upstream of the check valve 116 and downstream of the check valve 114 is connected to the overflow passage 80 via a water drainage passage 120. An atmospheric vent valve 122 is disposed on the water drainage passage 120. A water supply pressure from the water supply passage 84 is applied to the atmospheric vent valve 122 via a backpressure passage 124. When the water supply pressure of the water supply passage 84 decreases, the atmospheric vent valve 122 opens the water drainage passage 120 to establish communication between the bathtub filling passage 110 and the overflow passage 80.

The downstream end of the bathtub filling passage 110 is connected to a bathtub return passage 126. One end of the bathtub return passage 126 is connected to a circulation fitting 128 of the bathtub 4. The other end of the bathtub return passage 126 is connected to an inlet of a reheating pump 132. A bathtub return thermistor 130 is disposed on a portion of the bathtub return passage 126 between the connection between the bathtub return passage 126 and the bathtub filling passage 110 and the reheating pump 132. The bathtub return thermistor 130 detects the temperature of water flowing from the bathtub return passage 126 into the reheating pump 132. Further, an outlet of the reheating pump 132 is connected to one end of a bathtub supply passage 134. A reheating heat exchanger 136 is disposed on the bathtub supply passage 134. In the reheating heat exchanger 136, heat is exchanged between the heat medium flowing through a reheating circulation passage 180 and water flowing through the bathtub supply passage 134. A flow switch 138 and a water level sensor 140 are disposed on a portion of the bathtub supply passage 134 between the reheating pump 132 and the reheating heat exchanger 136. The flow switch 138 detects whether water is flowing through the bathtub supply passage 134 or not. The water level sensor 140 detects the level of water in the bathtub 4. A bathtub supply thermistor 142 is disposed on a portion of the bathtub supply passage 134 downstream of the reheating heat exchanger 136. The bathtub supply thermistor 142 detects the temperature of water flowing through the bathtub supply passage 134. The other end of the bathtub supply passage 134 is connected to the circulation fitting 128 of the bathtub 4.

For the heating apparatus 2 to fill the bathtub 4 with hot water, the burners 32a, 32b, 32c of the first heat source 14 burn the fuel gas while the bathtub filling control valve 112 is open. In this case, water supplied from the water supply into the water supply passage 84 is heated by heat exchange in the latent heat exchanger 40 and subsequently further heated by heat exchange in the sensible heat exchanger 38. The high-temperature water flowing from the sensible heat exchanger 38 into the hot water supply passage 88 is mixed with the low-temperature water flowing from the water supply passage 84 through the hot water bypass passage 90 into the hot water supply passage 88. The water with a desired temperature, which has been adjusted by controlling combustion of the burners 32a, 32b, 32c of the first heat source 14 and/or by controlling the open area of the hot water bypass passage 90 by the bypass servo 92, flows through the bathtub filling passage 110 into the bathtub return passage 126. After flowing into the bathtub return passage 126, the water diverges into a water flow toward the one end of the bathtub return passage 126 and a water flow toward the other end of the bathtub return passage 126. The water flow toward the one end of the bathtub return passage 126 flows into the bathtub 4 through the circulation fitting 128. The water flow toward the other end of the bathtub return passage 126 flows through the reheating pump 132, the bathtub supply passage 134, and the circulation fitting 128 into the bathtub 4.

The upstream end of the latent heat exchanger 56 of the second heat source 16 is connected to the downstream end of a first space-heating return passage 144. The downstream end of the latent heat exchanger 56 is connected to the upstream end of a second space-heating return passage 146. The downstream end of the second space-heating return passage 146 is connected to a cistern 148. The cistern 148 is a container that is configured to communicate with the atmosphere and stores water (the heat medium in this embodiment) therein. A high water-level electrode 150a and a low water-level electrode 150b configured to detect a water level in the cistern 148 are disposed on the cistern 148. The water level detected by the high water-level electrode 150a (cistern high water level) is higher than the water level detected by the low water-level electrode 150b (cistern low water level). Further, a water refill passage 152 for supplying water (heat medium) from the water supply (not illustrated) to the cistern 148 is connected to the cistern 148. The water refill passage 152 branches off from the water supply passage 84. A water refill control valve 154 is disposed on the water refill passage 152 and opens and closes the water refill passage 152. When the water level in the cistern 148 is lower than the cistern low water level, the heating apparatus 2 opens the water refill control valve 154 to supply water (heat medium) from the water supply to the cistern 148 through the water supply passage 84 and the water refill passage 152. Once the water level in the cistern 148 has reached the cistern high water level, the heating apparatus 2 closes the water refill control valve 154 to stop the water supply to the cistern 148. Thus, the water level in the cistern 148 is maintained somewhere between the cistern high water level and the cistern low water level. Further, a heat-medium overflow passage 156 is disposed on the cistern 148. The upstream end of the heat-medium overflow passage 156 is connected to the interior of the cistern 148 via an overflow port 158 open to the interior of the cistern 148. The downstream end of the heat-medium overflow passage 156 is connected to the overflow passage 80. In a vertically up-down direction, the lower edge of the overflow port 158 is positioned above the lower end of the high water-level electrode 150a (i.e., the cistern high water level). If the water level in the cistern 148 rises above the cistern high water level for some reason and reaches the lower edge of the overflow port 158, the water (heat medium) in the cistern 148 flows into the overflow port 158. After flowing into the overflow port 158, the water (heat medium) flows through the heat-medium overflow passage 156 and the overflow passage 80 and then is discharged to the drainage location. In this way, the water (heat medium) is suppressed from overflowing from the cistern 148.

The upstream end of a third space-heating return passage 160 is connected to a lower portion of the cistern 148. The downstream end of the third space-heating return passage 160 is connected to an inlet of a space heating pump 162. An outlet of the space heating pump 162 is connected to the upstream end of a discharge passage 164. The downstream end of the discharge passage 164 branches into a low-temperature space-heating supply passage 166 and a fourth space-heating return passage 168. The downstream end of the low-temperature space-heating supply passage 166 is connected to the upstream end of a low-temperature space-heating return passage 170 via the low-temperature space heating terminal 6. In this embodiment, the low-temperature space heating terminal 6 is, for example, a floor heating panel. The low-temperature space heating terminal 6 heats a space by the heat dissipated from the heat medium. Although not illustrated, a shutoff valve is located inside the low-temperature space heating terminal 6. This shutoff valve is open when the low-temperature space heating terminal 6 heats the space, while it is closed when the low-temperature space heating terminal 6 does not heat the space. Further, a low-temperature space-heating thermistor 172 is disposed on the fourth space-heating return passage 168 and is configured to detect the temperature of heat medium immediately after it has been pumped out from the space heating pump 162. The downstream end of the fourth space-heating return passage 168 is connected to the upstream end of the sensible heat exchanger 54. The downstream end of the sensible heat exchanger 54 is connected to the upstream end of a high-temperature heat medium passage 174. A heat exchanger exit thermistor 176 is disposed on the high-temperature heat medium passage 174. The heat exchanger exit thermistor 176 detects the temperature of heat medium flowing from the sensible heat exchanger 54 into the high-temperature heat medium passage 174. The downstream end of the high-temperature heat medium passage 174 branches into a high-temperature space-heating supply passage 178, a reheating circulation passage 180, and a space-heating bypass passage 182. The downstream end of the high-temperature space-heating supply passage 178 is connected to the upstream end of a high-temperature space-heating return passage 184 via the high-temperature space heating terminal 8. In this embodiment, the high-temperature space heating terminal 8 is, for example, a bathroom heater-dryer. The high-temperature space heating terminal 8 heats a space by the heat dissipated from the heat medium. Although not illustrated, a shutoff valve is located inside the high-temperature space heating terminal 8. This shutoff valve is open when the high-temperature space heating terminal 8 heats the space, while it is closed when the high-temperature space heating terminal 8 does not heat the space. The low-temperature space-heating return passage 170 and the high-temperature space heating return passage 184 join at their downstream ends and are connected to the upstream end of the first space-heating return passage 144. Further, the downstream end of the space-heating bypass passage 182 is connected to the lower portion of the cistern 148. A bypass-passage shutoff valve 186 for opening and closing the space-heating bypass passage 182 is disposed on the space-heating bypass passage 182. Further, the downstream end of the reheating circulation passage 180 is connected to the first space-heating return passage 144. A reheating control valve 188 for opening and closing the reheating circulation passage 180 is disposed on a portion of the reheating circulation passage 180 upstream of the reheating heat exchanger 136.

For the heating apparatus 2 to heat a space using the low-temperature space heating terminal 6, the shutoff valve (not illustrated) in the low-temperature space heating terminal 6 and the bypass-passage shutoff valve 186 are opened and the shutoff valve (not illustrated) in the high-temperature space heating terminal 8 is closed. For the sake of brevity, the reheating control valve 188 is assumed to be closed. In this state, the space heating pump 162 is operated and the burners 48a, 48b of the second heat source 16 burn the fuel gas. In this case, the heat medium flowing through the first space-heating return passage 144 flows into the latent heat exchanger 56. After flowing into the latent heat exchanger 56, the heat medium is heated by heat exchange in the latent heat exchanger 56 and then flows through the second space-heating return passage 146 toward the cistern 148. The heat medium stored in the cistern 148 flows through the third space-heating return passage 160 and the space heating pump 162 into the discharge passage 164. After flowing into the discharge passage 164, the heat medium diverges into a flow toward the sensible heat exchanger 54 through the fourth space-heating return passage 168 and a flow toward the low-temperature space heating terminal 6 through the low-temperature space-heating supply passage 166. After flowing into the sensible heat exchanger 54 through the fourth space-heating return passage 168, the heat medium is heated by heat exchange in the sensible heat exchanger 54 and then flows into the high-temperature heat medium passage 174. After flowing into the high-temperature heat medium passage 174, the heat medium flows through the space-heating bypass passage 182 into the cistern 148. Further, after flowing into the low-temperature space heating terminal 6 through the low-temperature space-heating supply passage 166, the heat medium dissipates its heat in the low-temperature space heating terminal 6 and then flows through the low-temperature space-heating return passage 170 into the first space-heating return passage 144. The temperature of the heat medium flowing through the low-temperature space heating terminal 6 can be adjusted to a desired temperature by controlling combustion of the burners 48a, 48b of the second heat source 16 and/or by controlling the output of the space heating pump 162.

For the heating apparatus 2 to heat a space using the high-temperature space heating terminal 8, the shutoff valve (not illustrated) in the high-temperature space heating terminal 8 is opened and the shutoff valve (not illustrated) in the low-temperature space heating terminal 6 and the bypass-passage shutoff valve 186 are closed. In this state, the space heating pump 162 is operated and the burners 48a, 48b of the second heat source 16 burn the fuel gas. For the sake of brevity, the reheating control valve 188 is assumed to be closed. In this case, the heat medium flowing through the first space-heating return passage 144 flows into the latent heat exchanger 56. After flowing into the latent heat exchanger 56, the heat medium is heated by heat exchange in the latent heat exchanger 56 and then flows through the second space-heating return passage 146 toward the cistern 148. The heat medium stored in the cistern 148 flows through the third space-heating return passage 160, the space heating pump 162, the discharge passage 164, and the fourth space-heating return passage 168 into the sensible heat exchanger 54. After flowing into the sensible heat exchanger 54, the heat medium is heated by heat exchange in the sensible heat exchanger 54 and then flows into the high-temperature heat medium passage 174. After flowing into the high-temperature heat medium passage 174, the heat medium flows through the high-temperature space-heating supply passage 178 into the high-temperature space heating terminal 8. After flowing into the high-temperature space heating terminal 8, the heat medium dissipates its heat in the high-temperature space heating terminal 8 and then flows through the high-temperature space-heating return passage 184 into the first space-heating return passage 144. The temperature of the heat medium flowing through the high-temperature space heating terminal 8 can be adjusted to a desired temperature by controlling combustion of the burners 48a, 48b of the second heat source 16 and/or by controlling the output of the space heating pump 162.

For the heating apparatus 2 to heat spaces using both the low-temperature space heating terminal 6 and the high-temperature space heating terminal 8, the shutoff valve (not illustrated) in the low-temperature space heating terminal 6 and the shutoff valve (not illustrated) in the high-temperature space heating terminal 8 are opened and the bypass-passage shutoff valve 186 is closed. In this state, the space heating pump 162 is operated and the burners 48a, 48b of the second heat source 16 burn the fuel gas. For the sake of brevity, the reheating control valve 188 is assumed to be closed. In this case, the heat medium flowing through the first space-heating return passage 144 flows into the latent heat exchanger 56. After flowing into the latent heat exchanger 56, the heat medium is heated by heat exchange in the latent heat exchanger 56 and then flows through the second space-heating return passage 146 into the cistern 148. The heat medium stored in the cistern 148 flows through the third space-heating return passage 160 and the space heating pump 162 into the discharge passage 164. After flowing into the discharge passage 164, the heat medium diverges into a flow toward the sensible heat exchanger 54 through the fourth space-heating return passage 168 and a flow toward the low-temperature space heating terminal 6 through the low-temperature space-heating supply passage 166. After flowing into the low-temperature space heating terminal 6 through the low-temperature space-heating supply passage 166, the heat medium dissipates its heat in the low-temperature space heating terminal 6 and then flows through the low-temperature space-heating return passage 170 into the first space-heating return passage 144. Further, after flowing into the sensible heat exchanger 54 through the fourth space-heating return passage 168, the heat medium is heated by heat exchange in the sensible heat exchanger 54 and then flows through the high-temperature space-heating supply passage 178 into the high-temperature space heating terminal 8. After flowing into the high-temperature space heating terminal 8 through the high-temperature space-heating supply passage 178, the heat medium dissipates its heat in the high-temperature space heating terminal 8 and then flows through the high-temperature space-heating return passage 184 into the first space-heating return passage 144. The temperature of the heat medium flowing through the low-temperature space heating terminal 6 and the high-temperature space heating terminal 8 can be adjusted to a desired temperature by controlling combustion of the burners 48a, 48b of the second heat source 16 and/or by controlling the output of the space heating pump 162.

For the heating apparatus 2 to reheat water in the bathtub 4, the reheating pump 132 and the space heating pump 162 are operated and the burners 48a, 48b of the second heat source 16 burn the fuel gas while the reheating control valve 188 is open. For the sake of brevity, the shutoff valve (not illustrated) in the low-temperature space heating terminal 6, the shutoff valve (not illustrated) in the high-temperature space heating terminal 8, and the bypass-passage shutoff valve 186 are assumed to be closed. In this case, the heat medium flowing through the first space-heating return passage 144 flows into the latent heat exchanger 56. After flowing into the latent heat exchanger 56, the heat medium is heated by heat exchange in the latent heat exchanger 56 and then flows through the second space-heating return passage 146 into the cistern 148. The heat medium stored in the cistern 148 flows through the third space-heating return passage 160, the space heating pump 162, the discharge passage 164, and the fourth space-heating return passage 168 into the sensible heat exchanger 54. After flowing into the sensible heat exchanger 54, the heat medium is heated by heat exchange in the sensible heat exchanger 54 and then flows through the high-temperature heat medium passage 174 into the reheating circulation passage 180. After flowing into the reheating circulation passage 180, the heat medium is cooled in the reheating heat exchanger 136 by heat exchange with the water flowing through the bathtub supply passage 134 and then returns to the first space-heating return passage 144. Further, the water in the bathtub 4 flows through the circulation fitting 128 into the bathtub return passage 126 and then flows through the reheating pump 132 into the bathtub supply passage 134. After flowing into the bathtub supply passage 134, the water is heated in the reheating heat exchanger 136 by heat exchange with the heat medium flowing through the reheating circulation passage 180 and then returns to the bathtub 4 through the circulation fitting 128. The water with a desired temperature can be supplied to the bathtub 4 by controlling combustion of the burners 48a, 48b of the second heat source 16 and/or by controlling the output of the space heating pump 162.

In this embodiment, the water supply passage 84, the latent heat exchanger 40, the communication passage 86, the sensible heat exchanger 38, the hot water supply passage 88, the hot water bypass passage 90, the heat exchanger bypass passage 108, the bathtub filling passage 110, the bathtub return passage 126, the reheating pump 132, and the bathtub supply passage 134 are collectively termed "a bathtub hot-water supply circuit B". Further, the first space-heating return passage 144, the latent heat exchanger 56, the second space-heating return passage 146, the cistern 148, the third space-heating return passage 160, the space heating pump 162, the discharge passage 164, the low-temperature space-heating supply passage 166, the fourth space-heating return passage 168, the sensible heat exchanger 54, the high-temperature heat medium passage 174, the high-temperature space-heating supply passage 178, the reheating circulation passage 180, and the space-heating bypass passage 182 are collectively termed "a space heating circuit H". It should be noted that in this embodiment, the heat medium flowing through the space heating circuit H is heated mainly by the sensible heat exchanger 54. It should be noted that the latent heat exchanger 56 supplementarily heats the heat medium by latent heat generated when moisture in the combustion gas is condensed.

The heating apparatus 2 further comprises a micro bubble generator 190 and an air introducing mechanism 192. The micro bubble generator 190 is disposed on the third space-heating return passage 160. The air introducing mechanism 192 is disposed between the micro bubble generator 190 and the cistern 148.

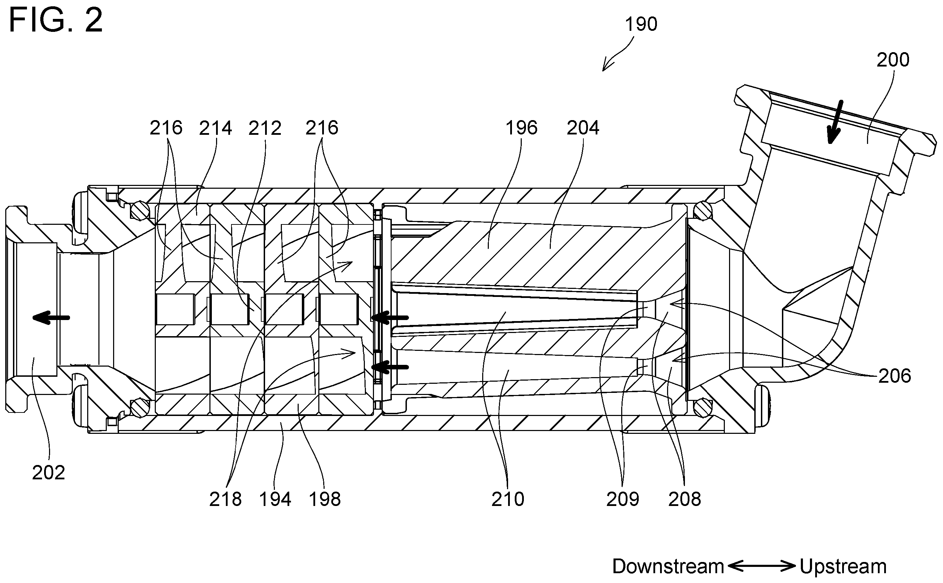

As illustrated in FIG. 2, the micro bubble generator 190 comprises a casing 194, a first micro bubble generating unit 196, and a second micro bubble generating unit 198. The casing 194 is substantially cylindrical in shape. The casing 194 can be regarded as a part of the space heating circuit H (specifically, the third space-heating return passage 160). A water inlet 200 through which water (heat medium) flows in is located at the upstream end of the casing 194. A water outlet 202 through which the water flows out is located at the downstream end of the casing 194. The first micro bubble generating unit 196 is housed in the casing 194. The first micro bubble generating unit 196 comprises a body 204 and a plurality of Venturi passages 206 extending through the body 204. Each of the Venturi passages 206 comprises a reduced-diameter passage 208 having a diameter reduced from the upstream end toward the downstream end, and an increased-diameter passage 210 located downstream of the reduced-diameter passage 208 and having a diameter increased from the upstream end toward the downstream end. A throat 209 where the diameter of the Venturi passage 206 is the smallest is located between the reduced-diameter passage 208 and the increased-diameter passage 210. The second micro bubble generating unit 198 is housed in the casing 194 and located downstream of the first micro bubble generating unit 196. The second micro bubble generating unit 198 comprises a shaft 212 extending from the upstream end toward the downstream end, an outer periphery 214 surrounding the shaft 212 from radially outside, and a plurality of blades 216 located between the shaft 212 and the outer periphery 214. A swirling passage 218 is formed between the shaft 212, the outer periphery 214, and the plurality of blades 216.

As illustrated in FIG. 1, the air introducing mechanism 192 comprises an air introduction passage 220 extending between the micro bubble generator 190 and the cistern 148. The downstream end of the air introduction passage 220 is connected to the third space-heating return passage 160 via the micro bubble generator 190. Specifically, the downstream end of the air introduction passage 220 is connected to the throats 209 (see FIG. 2) of the Venturi passages 206. Further, the upstream end of the air introduction passage 220 is connected to the interior of the cistern 148 via an intake port 222 open to the interior of the cistern 148. In the vertically up-down direction, the lower end of the intake port 222 is located above the upper edge of the overflow port 158.

When water (heat medium) flows into the micro bubble generator 190 illustrated in FIG. 2, the water first flows into the Venturi passages 206 of the first micro bubble generating unit 196. The pressure of the water is decreased to the atmospheric pressure or less while flowing through the reduced-diameter passages 208 of the Venturi passages 206. This causes air in the water flowing through the reduced-diameter passages 208 to effervesce as bubbles. Further, a negative pressure (a pressure equal to the atmospheric pressure or less) is generated in the throats 209 through which the water flows after the pressure has been decreased in the reduced-diameter passages 208. This negative pressure withdraws air in the cistern 148 into the throats 209 via the intake port 222 and the air introduction passage 220. After drawn into the throats 209, the air is incorporated into the water flowing through the throats 209 as bubbles. Thus, the water flowing from the throats 209 into the increased-diameter passages 210 includes the bubbles effervescing from the water as well as the bubbles drawn in from the air introduction passage 220. Subsequently, the pressure of the water is increased to the atmospheric pressure or more while the water is flowing through the increased-diameter passages 210. This breaks down the bubbles in the water into fine bubbles. After flowing out from the Venturi passages 206, the water flows into the swirling passage 218 of the second micro bubble generating unit 198. While the water is flowing through the swirling passage 218, a swirling flow of the water swirling about the shaft 212 is generated. During the swirling, the fine bubbles in the water are broken down into micro bubbles by the shear force of the swirling flow. In this way, the micro bubbles are generated in the circuit on which the micro bubble generator 190 is disposed (space heating circuit H).

Deposit-forming components may be incorporated in the heat medium flowing through the space heating circuit H illustrated in FIG. 1. Deposit-forming components here include, for example, magnesium ions and calcium ions which may cause water scale. As such, the deposit-forming components may include cations. In contrast, the micro bubbles generated by the micro bubble generator 190 are typically negatively charged. Thus, the micro bubbles generated by the micro bubble generator 190 can adsorb the deposit-forming components. This suppresses deposit buildup on the inner walls of passages of the space heating circuit H. Further, a part of the micro bubbles generated by the micro bubble generator 190 covers the inner walls of passages of the space heating circuit H. This also suppresses the deposit buildup on the inner walls of passages of the space heating circuit H.

In this embodiment, even if the heat medium flowing through the space heating circuit H flows into the air introduction passage 220 and flows out from the air introduction passage 220 through the intake port 222, the heat medium flows into the cistern 148. Thus, the heat medium flowing through the space heating circuit H is suppressed from flowing to an unintended location. Especially in this embodiment, since the lower edge of the intake port 222 is positioned above the upper edge of the overflow port 158 in the vertically up-down direction, the water level in the cistern 148 does not reach the lower edge of the intake port 222. Thus, when air in the cistern 148 is drawn into the air introduction passage 220 through the intake port 222, the water in the cistern 148 is not drawn into the air introduction passage 220 through the intake port 222 along with the air. Therefore, the air in the cistern 148 can be sufficiently introduced into the space heating circuit H.

### (Second Embodiment: Heating Apparatus 252)

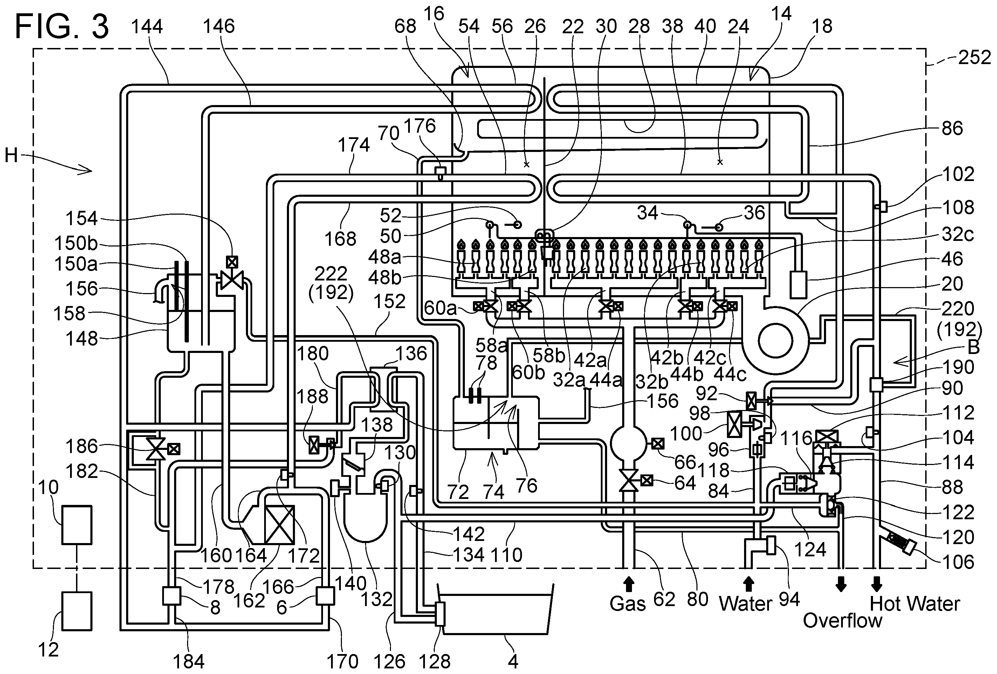

A heating apparatus 252 illustrated in FIG. 3 comprises a substantially similar configuration to the heating apparatus 2 according to the first embodiment (see FIG. 1). Elements common to the heating apparatus 252 and the heating apparatus 2 are denoted by the same reference signs, and their descriptions are omitted. Hereinafter, the heating apparatus 252 is described with emphasis on differences from the heating apparatus 2.

The heating apparatus 252 is different from the heating apparatus 2 in that the micro bubble generator 190 is disposed on the hot water supply passage 88 of the bathtub hot-water supply circuit B instead of the third space-heating return passage 160 and that the intake port 222 of the air introducing mechanism 192 is disposed in the neutralizer 72 instead of the cistern 148. Specifically, the micro bubble generator 190 is disposed downstream of the connection between the hot water supply passage 88 and the hot water bypass passage 90 and upstream of the hot water supply thermistor 104. The intake port 222 is positioned above the lower edge of the overflow port 76 and open to the space downstream of the trap structure 74.

When water flows through the micro bubble generator 190 (i.e., the hot water supply passage 88), air in the neutralizer 72 is drawn into the micro bubble generator 190 through the intake port 222 and the air introduction passage 220 due to a negative pressure caused by the flow of water. The air drawn into the micro bubble generator 190 then dissolves into the water. Subsequently, the micro bubble generator 190 generates micro bubbles in the water flowing through the hot water supply passage 88 according to the same principle as described in the first embodiment. Thus, when the heating apparatus 252 supplies hot water to the faucet (not illustrated), water incorporating the micro bubbles is supplied to the faucet (not illustrated). Further, when the heating apparatus 252 fills the bathtub 4 with hot water, water incorporating the micro bubbles is supplied to the bathtub 4.

In this embodiment, even if water flowing through the bathtub hot-water supply circuit B flows into the air introduction passage 220 and flows out from the air introduction passage 220 through the intake port 222, the water flows into the neutralizer 72. Thus, the water flowing through the bathtub hot-water supply circuit B is suppressed from flowing to an unintended location.

### (Third Embodiment: Heating Apparatus 302)

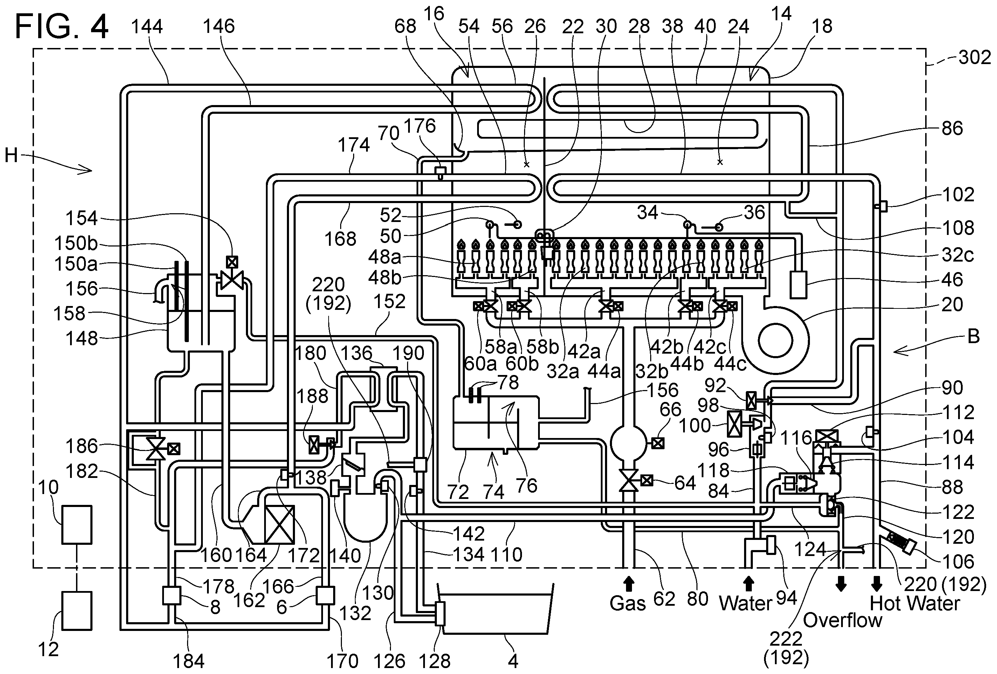

A heating apparatus 302 illustrated in FIG. 4 comprises a substantially similar configuration to the heating apparatus 2 according to the first embodiment (see FIG. 1). Elements common to the heating apparatus 302 and the heating apparatus 2 are denoted by the same reference signs, and their descriptions are omitted. Hereinafter, the heating apparatus 302 is described with emphasis on differences from the heating apparatus 2.

The heating apparatus 302 is different from the heating apparatus 2 in that the micro bubble generator 190 is disposed on the bathtub supply passage 134 of the bathtub hot-water supply circuit B instead of the third space-heating return passage 160 and that the intake port 222 of the air introducing mechanism 192 is formed in the overflow passage 80 instead of the cistern 148. Specifically, the micro bubble generator 190 is disposed downstream of the reheating heat exchanger 136 and upstream of the bathtub supply thermistor 142. Specifically, the intake port 222 is located downstream of the connection between the overflow passage 80 and the water drainage passage 120.

When water flows through the micro bubble generator 190 (i.e., the bathtub supply passage 134), air in the overflow passage 80 is drawn into the micro bubble generator 190 through the intake port 222 and the air introduction passage 220 due to a negative pressure caused by the flow of water. The air drawn into the micro bubble generator 190 then dissolves into the water. Subsequently, the micro bubble generator 190 generates micro bubbles in the water flowing through the bathtub supply passage 134 according to the same principle as described in the first embodiment. Thus, when the heating apparatus 302 fills the bathtub 4 with hot water, water incorporating the micro bubbles is supplied to the bathtub 4. Further, when the heating apparatus 302 reheats water in the bathtub 4, water incorporating the micro bubbles is supplied to the bathtub 4.

In this embodiment, even if water flowing through the bathtub hot-water supply circuit B flows into the air introduction passage 220 and flows out from the air introduction passage 220 through the intake port 222, the water flows into the overflow passage 80. Thus, the water flowing through the bathtub hot-water supply circuit B is suppressed from flowing to an unintended location.

### (Modifications of First, Second, and Third Embodiments)

In the first, second, and third embodiments, the heat medium flowing through the space heating circuit H may be a liquid other than water (e.g., antifreeze liquid). In this case, the heating apparatuses 2, 252, 302 may not comprise the water refill passage 152 or the water refill control valve 154.

In the first, second, and third embodiments, the heating apparatuses 2, 252, 302 may comprise a heat source other than a combustion-type heat source instead of or in addition to the first heat source 14 and/or the second heat source 16. For example, the heating apparatuses 2, 252, 302 may comprise an electric heater, a heat pump, and/or a cogeneration system.

In the first, second, and third embodiments, the micro bubble generator 190 may be replaced with a different aspect of micro bubble generator. For example, the micro bubble generator 190 may be replaced with a micro bubble generator that comprises a pressurizer configured to dissolve air into a liquid by pressurizing the liquid (e.g., a pressure tank) and a pressure reducer configured to cause micro bubbles to be generated by reducing the pressure of the liquid (e.g., a Venturi).

In the first, second, and third embodiments, the downstream end of the air introduction passage 220 may be connected to the space heating circuit H (or the bathtub hot-water supply circuit B) without the intervention of the micro bubble generator 190 therebetween. For example, the downstream end of the air introduction passage 220 may be connected to the space heating circuit H (or the bathtub hot-water supply circuit B) at a position upstream of the micro bubble generator 190. In this case, a pressure reducer configured to cause a negative pressure with a liquid flow (e.g., a Venturi) may be disposed at the position where the downstream end of the air introduction passage 220 is connected. Air in the air introduction passage 220 may be drawn into the space heating circuit H (or the bathtub hot-water supply circuit B) by the negative pressure caused by the pressure reducer.

In the first embodiment, the intake port 222 of the air introducing mechanism 192 may be formed in the neutralizer 72 (at the position of the intake port 222 described in the second embodiment) instead of the cistern 148. In this case, air in the neutralizer 72 may be introduced into the heat medium flowing through the space heating circuit H. Alternatively, the intake port 222 may be formed in the overflow passage 80 (at the position of the intake port 222 described in the third embodiment) instead of the cistern 148. In this case, air in the overflow passage 80 may be introduced into the heat medium flowing through the space heating circuit H.

In the second embodiment, the intake port 222 of the air introducing mechanism 192 may be formed in the cistern 148 (at the position of the intake port 222 described in the first embodiment) instead of the neutralizer 72. In this case, air in the cistern 148 may be introduced into the water flowing through the hot water supply passage 88 of the bathtub hot-water supply circuit B.

In the first embodiment, the lower edge of the intake port 222 may be positioned above the lower end of the high water-level electrode 150a (i.e., the cistern high water level) and at or below the lower edge of the overflow port 158.

### (Correspondence Relationships in First, Second, and Third Embodiments)

In the first, second, and third embodiments, the heating apparatuses 2, 252, 302 are examples of "apparatus". The cistern 148 (or the neutralizer 72) is an example of "container". The overflow passage 80 is an example of "liquid drainage passage". The heat medium (or water) is an example of "liquid". The third space-heating return passage 160 (or the hot water supply passage 88, the bathtub supply passage 134) is an example of "liquid passage". The air introducing mechanism 192 is an example of "air introducer". The micro bubble generator 190 is an example of "micro bubble generator". The intake port 222 is an example of "intake port". The air introduction passage 220 is an example of "air introduction passage". The burners 48a, 48b, the sensible heat exchanger 54, and the latent heat exchanger 56 are an example of "heater". The low-temperature space heating terminal 6 and the high-temperature space heating terminal 8 are examples of "space-heating device". The space heating circuit H is an example of "space heating circuit". The space heating pump 162 is an example of "pump". The cistern 148 is an example of "cistern". The overflow port 158 is an example of "first overflow port". The overflow passage 80 and the heat-medium overflow passage 156 are an example of "first overflow passage". The burners 48a, 48b are examples of "combustor". The latent heat exchanger 56 is an example of "latent heat exchanger". The neutralizer 72 is an example of "neutralizer". The overflow port 76 is an example of "second overflow port". The overflow passage 80 is an example of "second overflow passage".

### (Fourth Embodiment: Dishwasher 402)

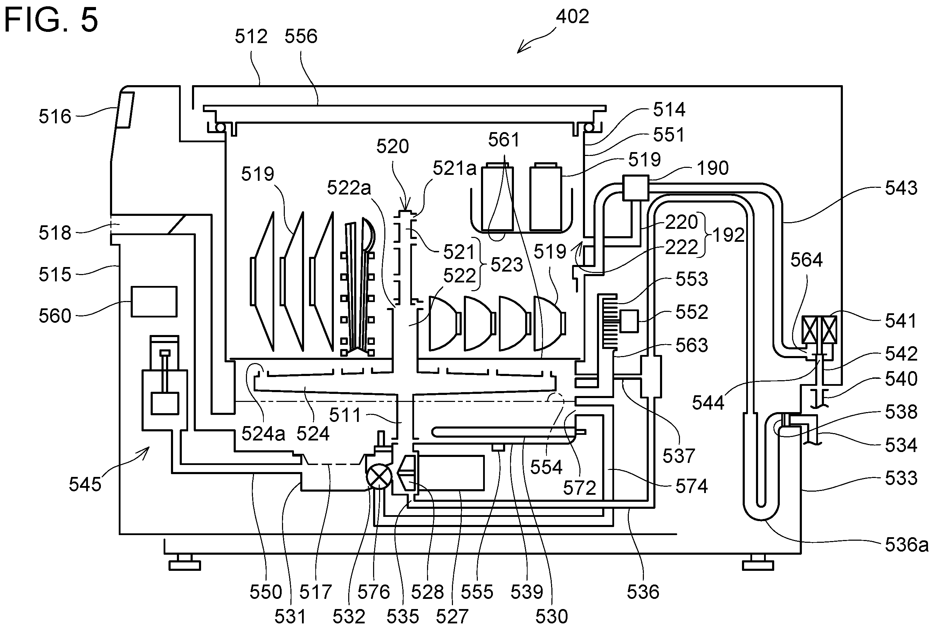

FIG. 5 is a longitudinal cross-sectional view of a dishwasher 402. The dishwasher 402 is a drawer-type dishwasher. The dishwasher 402 comprises a body 512, a washing chamber 514, a door 515, a washing controller 560, a micro bubble generator 190, and an air introducing mechanism 192. The micro bubble generator 190 and the air introducing mechanism 192 here have substantially the same configurations as those described in the first embodiment.

An operation panel 516 and an exhaust passage 518 are located in the door 515. The operation panel 516 includes various buttons such as a start button, lamps, and the like. The exhaust passage 518 extends from the interior of the washing chamber 514 to the external space.

The washing chamber 514 is housed in the space defined by the body 512 and the door 515. The washing chamber 514 is slidably supported by the body 512. The washing chamber 514 is connected to the door 515. The washing chamber 514 has a box shape open at the top. A lid 556 is located above the washing chamber 514. The lid 556 is connected to the washing chamber 514 by a lift mechanism which is not illustrated.

The washing chamber 514 houses a washing nozzle 520, tableware baskets 561 for holding various types of tableware 519, a food debris filter 517, a heater 530, a thermistor 555, and the like. The washing nozzle 520 comprises a tower nozzle unit 523 including an upper nozzle 521 and a lower nozzle 522 and a horizontal nozzle unit 524. The washing nozzle 520 includes a plurality of jet outlets 521a, 522a, 524a. The electric heater 530 configured to heat water and air in the washing chamber 514 is located near a bottom surface 539 of the washing chamber 514. The thermistor 555 is located on the bottom surface 539 of the washing chamber 514.

A water level detection unit 545 configured to detect the water level in the washing chamber 514 is located forward of a lower portion of the washing chamber 514. The water level in the washing chamber 514 when water is normally supplied (hereinafter referred to as "washing water level") is indicated by a two-dot chain line 554. A washing pump 527 is located below the bottom surface 539 of the washing chamber 514. The washing pump 527 rotates an impeller 528 by a built-in electric motor. The washing nozzle 520 is rotatably attached to the bottom surface 539 of the washing chamber 514. The washing nozzle 520 is in communication with a first outlet 511 of the washing pump 527.

A suction recess 531 is formed in the bottom of the washing chamber 514. The upward opening of the suction recess 531 is covered by the food debris filter 517. The water level detection unit 545 and the suction recess 531 are connected by a water level passage 550. The washing pump 527 and the suction recess 531 are connected by a first suction passage 532. One end of a second suction passage 574 is connected to the first suction passage 532. The other end of the second suction passage 574 is connected to an opening 572 in a rear wall 551 of the washing chamber 514. A passage switching valve 576 is attached to the connection between the first suction passage 532 and the second suction passage 574.

A drying fan 552 is located on the outer side of the rear wall 551 of the washing chamber 514. The drying fan 552 rotates a fan 553 by a built-in motor. The drying fan 552 is in communication with the interior of the washing chamber 514 via a drying passage 563. The drying fan 552 is positioned above the washing water level 554.

A water drainage hose 534 is connected to a rear wall 533 of the body 512. The water drainage hose 534 is in communication with a second outlet 535 of the washing pump 527 via a water drainage passage 536. An intermediate portion of the water drainage passage 536 is in communication with the interior of the washing chamber 514 via an air vent passage 537. A drainage check valve 538 is located near the connection between the water drainage passage 536 and the water drainage hose 534.

A water supply hose 540 is connected to a horizontal stepped portion formed in a middle portion of the rear wall 533 of the body 512. Water from a water supply (not illustrated) such as public water supply may be directly supplied to the water supply hose 540 or hot water may be supplied to the water supply hose 540. A water supply valve 541 is attached to the inner side of the rear wall 533. The water supply hose 540 is in communication with an inlet 544 of the water supply valve 541 via a first water supply passage 542. An outlet 564 of the water supply valve 541 is in communication with the interior of the washing chamber 514 via a second water supply passage 543.

The washing controller 560 comprises a CPU, a ROM, a RAM, and the like, and controls the dishwasher 402. The washing controller 560 performs a washing operation for washing the tableware 519 in the washing chamber 514 by controlling the dishwasher 402.

### (Washing Operation)

In response to receiving a dishwashing operation start instruction from a user via the operation panel 516, the washing controller 560 performs a washing step, a rinsing step, and a drying step in sequence.

In the washing step, the washing controller 560 opens the water supply valve 541 to supply water from the water supply hose 540 into the washing chamber 514. At this time, a detergent stored in a detergent tank, which is not illustrated, is added to the water supplied into the washing chamber 514. Thus, in the washing step, a mixture of water and the detergent (hereinafter referred to as "washing water") is supplied into the washing chamber 514. The washing controller 560 closes the water supply valve 541 in response to determining that an amount of washing water required in the washing step has been supplied into the washing chamber 514. Then, the washing controller 560 drives the washing pump 527 to rotate the impeller 528 in the forward direction and turns on the heater 530. Due to the forward rotation of the impeller 528, the washing water in the suction recess 531 is suctioned into the washing pump 527 and pumped into the washing nozzle 520. The washing water pumped into the washing nozzle 520 is jetted out from the jet outlets 521a, 522a, 524a. The tableware 519 is thereby washed. The washing controller 560 terminates the washing step in response to a first predetermined period (e.g., five minutes) having elapsed from the start of the washing step. Further, the washing controller 560 drives the washing pump 527 to rotate the impeller 528 in the reverse direction. Due to the reverse rotation of the impeller 528, the washing water in the suction recess 531 is suctioned into the washing pump 527 and pumped to the water drainage hose 534 through the water drainage passage 536. The washing water is thereby drained from the washing chamber 514.

In the rinsing step, the washing controller 560 opens the water supply valve 541 to supply rinsing water from the water supply hose 540 into the washing chamber 514. The rinsing water here means water in which the detergent is not added. Once an amount of rinsing water required in the rinsing step has been supplied into the washing chamber 514, the washing controller 560 closes the water supply valve 541. The washing controller 560 drives the washing pump 527 to rotate the impeller 528 in the forward direction. Due to the forward rotation of the impeller 528, the rinsing water in the suction recess 531 is suctioned into the washing pump 527 and pumped into the washing nozzle 520. The rinsing water pumped into the washing nozzle 520 is jetted out from the jet outlets 521a, 522a, 524a. The tableware 519 is thereby rinsed. The washing controller 560 terminates the rinsing step in response to a second predetermined period (e.g., five minutes) having elapsed from the start of the rinsing step. Further, the washing controller 560 drives the washing pump 527 to rotate the impeller 528 in the reverse direction. Due to the reverse rotation of the impeller 528, the rinsing water in the suction recess 531 is suctioned into the washing pump 527 and pumped to the water drainage hose 534 through the water drainage passage 536. The rinsing water is thereby drained from the washing chamber 514.

In the drying step, the washing controller 560 heats air in the washing chamber 514 by the heater 530 to dry the tableware 519. The washing controller 560 terminates the drying step by terminating the heating by the heater 530 in response to a third predetermined period (e.g., 20 minutes) having elapsed from the start of drying of the tableware 519.

The micro bubble generator 190 is disposed on the second water supply passage 543. The intake port 222 of the air introducing mechanism 192 is formed in the washing chamber 514. The intake port 222 is positioned vertically above the washing water level 554 in the washing chamber 514. When water flows through the micro bubble generator 190 (i.e., the second water supply passage 543), air in the washing chamber 514 is drawn into the micro bubble generator 190 through the intake port 222 and the air introduction passage 220 due to a negative pressure caused by the flow of water. The air drawn into the micro bubble generator 190 dissolves into the water. Subsequently, the micro bubble generator 190 generates micro bubbles in the water flowing through the second water supply passage 543 according to the same principle as described in the first embodiment. Thus, the water supplied into the washing chamber 514 in the washing step and the rinsing step incorporates many micro bubbles. The dirt on the tableware 519 is adsorbed onto the surfaces of micro bubbles in the water. The water incorporating a larger amount of micro bubbles can adsorb a greater amount of dirt.

In this embodiment, even if the water flowing through the second water supply passage 543 flows into the air introduction passage 220 and flows out from the air introduction passage 220 through the intake port 222, the water flows into the washing chamber 514. Thus, the water flowing through the second water supply passage 543 is suppressed from flowing to an unintended location.

### (Fifth Embodiment: Dishwasher 502)

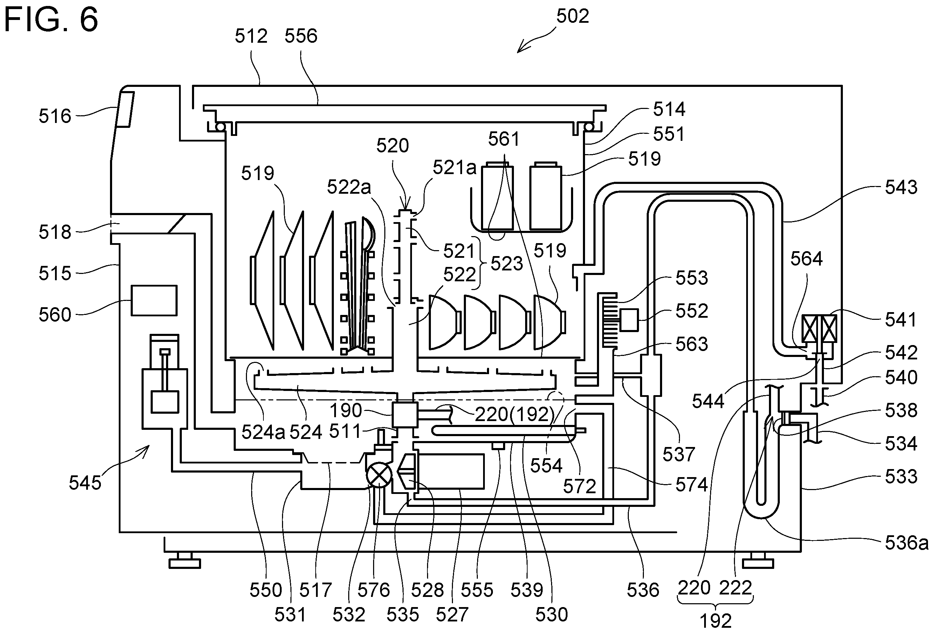

A dishwasher 502 illustrated in FIG. 6 comprises a substantially similar configuration to the dishwasher 402 according to the fourth embodiment (see FIG. 5). Elements common to the dishwasher 502 and the dishwasher 402 are denoted by the same reference signs, and their descriptions are omitted. Hereinafter, the dishwasher 502 is described with emphasis on differences from the dishwasher 402.

The dishwasher 502 is different from the dishwasher 402 in that the micro bubble generator 190 is disposed at the first outlet 511 of the washing pump 527 instead of the second water supply passage 543 and that the intake port 222 of the air introducing mechanism 192 is formed in the water drainage passage 536 instead of the washing chamber 514. Specifically, the intake port 222 is formed at a position where water in a drainage water trap 536a of the water drainage passage 536 (i.e., water seal) cannot reach.

When water flows through the micro bubble generator 190 (i.e., the first outlet 511), air in the water drainage passage 536 is drawn into the micro bubble generator 190 through the intake port 222 and the air introduction passage 220 due to a negative pressure caused by the flow of water. The air drawn into the micro bubble generator 190 dissolves into the water. Subsequently, the micro bubble generator 190 generates micro bubbles in the water flowing through the first outlet 511 according to the same principle as described in the first embodiment. Thus, the water jetted out from the jet outlets 521a, 522a, 524a in the washing step and the rinsing step incorporates many micro bubbles.

In this embodiment, even if the water flowing through the first outlet 511 flows into the air introduction passage 220 and flows out from the air introduction passage 220 through the intake port 222, the water flows into the water drainage passage 536. Thus, the water flowing through the first outlet 511 is suppressed from flowing to an unintended location.

### (Modifications of Fourth and Fifth Embodiments)

In the fourth embodiment, the intake port 222 of the air introducing mechanism 192 may be formed in the water drainage passage 536 (at the position of the intake port 222 described in the fifth embodiment) instead of the washing chamber 514. In this case, air in the water drainage passage 536 may be introduced into the water flowing through the second water supply passage 543.

In the fourth and fifth embodiments, the micro bubble generator 190 may be replaced with a different aspect of micro bubble generator. For example, the micro bubble generator 190 may be replaced with a micro bubble generator that comprises a pressurizer configured to dissolve air into a liquid by pressurizing the liquid (e.g., a pressure tank) and a pressure reducer configured to cause micro bubbles to be generated by reducing the pressure of the liquid (e.g., a Venturi).

In the fourth and fifth embodiments, the downstream end of the air introduction passage 220 may be connected to the second water supply passage 543 (or the first outlet 511) without the intervention of the micro bubble generator 190 therebetween. For example, the downstream end of the air introduction passage 220 may be connected to the second water supply passage 543 (or the first outlet 511) at a position upstream of the micro bubble generator 190. In this case, a pressure reducer configured to cause a negative pressure with a liquid flow (e.g., a Venturi) may be disposed at the position where the downstream end of the air introduction passage 220 is connected. Air in the air introduction passage 220 may be drawn into the second water supply passage 543 (or the first outlet 511) by the negative pressure caused by the pressure reducer.

### (Correspondence Relationships in Fourth and Fifth Embodiments)

In the fourth and fifth embodiments, the dishwashers 402, 502 are examples of "apparatus". The washing chamber 514 is an example of "container". The water drainage passage 536 is an example of "liquid drainage passage". Water is an example of "liquid". The second water supply passage 543 (or the first outlet 511) is an example of "liquid passage". The air introducing mechanism 192 is an example of "air introducer". The micro bubble generator 190 is an example of "micro bubble generator". The intake port 222 is an example of "intake port". The air introduction passage 220 is an example of "air introduction passage". The washing chamber 514 is an example of "washing chamber". The second water supply passage 543 is an example of "water supply passage". The washing nozzle 520 is an example of "washing nozzle". The first outlet 511 is an example of "washing passage". The washing pump 527 is an example of "washing pump". The water drainage passage 536 is an example of "water drainage passage".

Technical features described in the description and the drawings may technically be useful alone or in various combinations, and are not limited to the combinations as originally claimed. Further, the art described in the description and the drawings may concurrently achieve a plurality of aims, and technical significance thereof resides in achieving any one of such aims.

## Claims

1. An apparatus comprising:
a container open to atmosphere;
a liquid passage through which a liquid flows;
an air introducer configured to introduce air into the liquid passage; and
a micro bubble generator disposed on the liquid passage and configured to generate micro bubbles in the liquid flowing through the liquid passage by using the air introduced into the liquid passage,
wherein the air introducer includes:
an intake port that is open to an interior of the container; and
an air introduction passage connecting the intake port to an interior of the liquid passage.

2. The apparatus according to claim 1, further comprising:
a heater configured to heat a heat medium;
a space heating circuit configured to circulate the heat medium that has been heated by the heater to a space heating device configured for space heating by heat dissipated from the heat medium;
a space heating pump configured to pump the heat medium flowing through the space heating circuit; and
a cistern disposed on the space heating circuit,
wherein the container includes the cistern.

3. The apparatus according to claim 1, further comprising:
a combustor;
a latent heat exchanger configured to recover latent heat of combustion gas generated by the combustor and to heat a heat medium; and
a neutralizer configured to neutralize condensate generated by the latent heat exchanger,
wherein the container includes the neutralizer.

4. The apparatus according to claim 1, further comprising:
a washing chamber configured to house tableware;
a water supply passage through which water flows from a water supply to the washing chamber;
a washing nozzle disposed in the washing chamber;
a washing passage disposed in the washing chamber and connected to the washing nozzle;
a washing pump configured to pump water in the washing chamber to the washing nozzle through the washing passage; and
a water drainage passage through which water discharged from the washing chamber flows,
wherein the liquid passage is the water supply passage, and
the container includes the washing chamber.

5. An apparatus comprising:
a liquid drainage passage open to atmosphere;
a liquid passage through which a liquid flows;
an air introducer configured to introduce air into the liquid passage; and
a micro bubble generator disposed on the liquid passage and configured to generate micro bubbles in the liquid flowing through the liquid passage by using the air introduced into the liquid passage,
wherein the air introducer includes:
an intake port that is open to an interior of the liquid drainage passage; and
an air introduction passage connecting the intake port to an interior of the liquid passage.

6. The apparatus according to claim 5, further comprising:
a heater configured to heat a heat medium;
a space heating circuit configured to circulate the heat medium that has been heated by the heater to a space heating device configured for space heating by heat dissipated from the heat medium;
a space heating pump configured to pump the heat medium flowing through the space heating circuit;
a cistern disposed on the space heating circuit; and
a first overflow passage having one end thereof connected to a first overflow port of the cistern and another end thereof connected to a predetermined drainage location,
wherein the liquid drainage passage includes the first overflow passage.

7. The apparatus according to claim 5, further comprising:
a combustor;
a latent heat exchanger configured to recover latent heat of combustion gas generated by the combustor and to heat a heat medium;
a neutralizer configured to neutralize condensate generated by the latent heat exchanger; and
a second overflow passage having one end thereof connected to a second overflow port of the neutralizer and another end thereof connected to a predetermined drainage location,
wherein the liquid drainage passage includes the second overflow passage.

8. The apparatus according to claim 5, further comprising:
a washing chamber configured to house tableware;
a water supply passage through which water flows from a water supply to the washing chamber;
a washing nozzle disposed in the washing chamber;
a washing passage disposed in the washing chamber and connected to the washing nozzle;
a washing pump configured to pump water in the washing chamber to the washing nozzle through the washing passage; and
a water drainage passage through which water discharged from the washing chamber flows,
wherein the liquid passage is at least one of the water supply passage and the washing passage, and
the liquid drainage passage includes the water drainage passage.
